# EUROPEAN PATENT SPECIFICATION

(11) **EP 3 299 174 B1**
(45) Date of publication and mention of the grant of the patent: **16.02.2022**
(21) Application number: 16796504.5
(22) Date of filing: 17.05.2016
(51) Int. Cl.: B41J 2/175, F16L 11/04

(54) **INK SUPPLY TUBE**
TINTENZUFÜHRROHR
TUBE D'ALIMENTATION EN ENCRE

(30) Priority: 20.05.2015 JP 2015103051
(43) Date of publication of application: 28.03.2018
(73) Proprietor: Hakko Corporation, Tokyo 173-0004 (JP)
(72) Inventor: NAKANO Sadaaki, Iruma-gun Saitama 354-0041 (JP)
(74) Representative: Dehns
(86) International application number: PCT/JP2016/064612
(87) International publication number: WO 2016/186111

(56) References cited:
- EP-A1- 0 637 509
- EP-A1- 3 239 579
- JP-A- H05 228 996
- JP-A- H05 247 478
- JP-A- H05 255 554
- JP-A- S62 225 543
- JP-A- 2004 142 406
- JP-A- 2007 260 955
- JP-B2- 5 199 971
- US-B1- 6 823 898
- US-B2- 8 124 208

## Description

### Technical Field

The present invention relates to a tube for supplying ink for an inkjet printer.

### Background Art

Printing using an inkjet printer is usually performed such that dedicated ink previously sealed in an ink cartridge is supplied to the printer head through an ink supply tube, and is then jetted onto a medium, such as a piece of paper, thus to perform printing. Documents US8124208 and US6823898 disclose tubes for supplying ink.

An ink supply tube used in this process is a critical component essential to stably supply ink from the ink cartridge to the printer head.

Meanwhile, with an expansion of product line of ink as a result of recent feature improvements in inkjet printers, more diverse properties are demanded of such ink supply tube.

Examples of properties required of such an ink supply tube for an inkjet printer include, for example:
1. Solvent resistance: Retention, in an ink contact area, of resistance to solvent component used in various inks.
2. Oxygen barrier property: Prevention of change in properties of ink components caused by oxygen permeation from the outside.
3. Low moisture permeability: Prevention of change in properties of ink components caused by permeation of moisture, such as water vapor, from the outside.
4. Flexibility: Retention of tube performance in a U-bent configuration.

In recent years, there is an increasing demand for an ink supply tube having an excellent oxygen barrier property and an excellent low moisture permeability among these.

An ink supply tube that fails to have a sufficient oxygen barrier property and/or a sufficient low moisture permeability will cause oxygen and/or water vapor that has permeated through the ink supply tube to be mixed into the ink, and thus to change the properties of ink components, thereby causing nozzle clogging in the printer head, discharge problem due to bubble generation, and the like. Such situation presents a problem in that print quality is adversely affected.

To solve these problems, an ink supply tube for an inkjet printer is suggested that has an oxygen barrier property and a low moisture permeability in addition to an excellent solvent resistance, and has a multilayer structure having a good delamination resistance and a good flexibility (see, e.g., Patent Literature 1). This suggestion describes, by way of example, an ink supply tube having a three layer structure including an inner layer formed of an ethylene-tetrafluoroethylene copolymer resin (ETFE resin) having an excellent solvent resistance, an excellent oxygen barrier property, and an excellent low moisture permeability, a layer formed, as the middle layer, of an ethylene-vinyl alcohol copolymer resin (EVOH resin) having an excellent fusibility with an ETFE resin and an excellent oxygen barrier property, and a layer formed, as the outer layer, of a resin or elastomer having a fusibility with the middle layer, and a flexibility.

Moreover, an ink supply tube having a four layer structure is also described, as another example having another structure, including an inner layer formed of an ethylene-tetrafluoroethylene copolymer resin (ETFE resin), a layer formed, as a first middle layer, of a resin having an excellent fusibility with an ETFE resin and an excellent flexibility, a layer formed, as a second middle layer, of an ethylene-vinyl alcohol copolymer resin (EVOH resin), which is a resin having an excellent fusibility with the first middle layer and an excellent oxygen barrier property, and a layer formed, as the outer layer, of a resin or elastomer having a fusibility with the second middle layer and a flexibility.

### Citation List

### Patent Literature

Patent Literature 1: Japanese Patent No. 5199971

### Summary of Invention

### Technical Problem

As described above, the use of a layer formed of an EVOH resin for purposes of improving the oxygen barrier property is conventionally known. However, one drawback of the EVOH resin is that the oxygen barrier property decreases with an increase of humidity.

Thus, retention of an excellent oxygen barrier property requires to cover the inside and outside of the EVOH resin layer with a resin having an excellent low moisture permeability to protect the EVOH resin and to improve the property of low moisture permeability of the tube.

In this regard, Patent Literature 1 describes, by way of example, an ETFE resin for the inner layer and a polyethylene resin for the outer layer as the materials to serve as layers having a low moisture permeability. However, the inner layer and the outer layer are each limited to a particular resin having an excellent fusibility with an EVOH resin and an excellent low moisture permeability, and accordingly, there remains room for further improvement in oxygen barrier property and in low moisture permeability also for use with an inner layer and an outer layer of various types.

The present invention has been made in view of the foregoing situation, and it is thus an object of the present invention to provide a tube for supplying ink for an inkjet printer having a more excellent oxygen barrier property and a more excellent low moisture permeability in addition to an excellent solvent resistance and an excellent flexibility.

### Solution to Problem

That is, a tube for supplying ink of the present invention is characterized by the following configurations.

In one aspect the invention provides a tube for supplying ink comprising an inner layer (1) which is to be contacted with ink when in use, a middle layer having at least three layers (2-1, 2-2, 2-3), and an outer layer (3), wherein
the middle layer includes a first middle layer (2-1), a second middle layer (2-2), and a third middle layer (2-3),
the inner layer (1) has a thickness ranging from 0.01 to 0.5mm and comprises one of an ethylene-tetrafluoroethylene copolymer resin, a tetrafluoroethylene-perfluoroalkoxy alkane copolymer resin, and a modified perfluoroalkoxy-based resin, each having a solvent resistance and an oxygen barrier property,
the first middle layer (2-1) comprises one of a polyamide resin, a polyamide-based elastomer, an adhesive polyolefin resin or a polyurethane resin,
the second middle layer (2-2) has a thickness ranging from 0.01 to 0.3mm and comprises an ethylene-vinyl alcohol copolymer resin having an oxygen barrier property,
the third middle layer (2-3) comprises an adhesive polyolefin resin, a polyamide resin or a polyurethane resin, and
the outer layer (3) comprises a thermoplastic resin or elastomer.

The invention is such that the change in an amount of dissolved oxygen in the ink after leaving degassed ink sealed in the ink supply tube to stand for three days under conditions of a temperature of 20°C and a humidity of 60%, is less than 3.0 mg/L.

The resins that are used for the inner layer each have a solvent resistance, an oxygen barrier property, and a low moisture permeability.

The compositions of the first middle layer have a fusibility with the inner layer or the second middle layer and flexibility.

The compositions of the second middle layer have a fusion bondability with the first middle layer and the third middle layer, flexibility and an oxygen barrier property.

The compositions of the third middle layer have a fusibility with the second middle layer or the outer layer, flexibility, and a low water permeability.

The compositions of the outer layer have flexibility and a low moisture permeability.

### Advantageous Effects of Invention

A tube for supplying ink of the present invention can provide a tube for supplying ink for an inkjet printer having a more excellent oxygen barrier property and a more excellent low moisture permeability in addition to an excellent solvent resistance and an excellent bendability.

That is, improvement in oxygen barrier property and in low moisture permeability can reduce degradation of ink, and can thus obviate defective discharge that may occur, for example, when an inkjet printer is not used for a long time, such as during a long vacation. Thus, maintenance work may be performed less frequently.

### Brief Description of Drawing

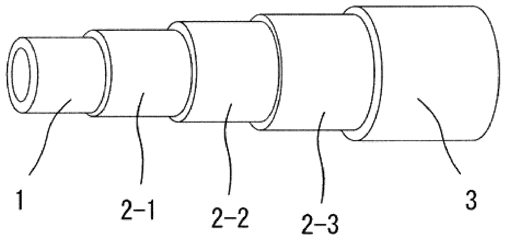

Fig. 1 is a schematic perspective view illustrating a layer structure of one embodiment of a tube for supplying ink of the present invention.

### Description of Embodiment

A tube for supplying ink of the present invention will be described below in detail using an embodiment.

A tube for supplying ink of the present invention is a tube for supplying ink having an oxygen barrier property and a low moisture permeability, and comprising an inner layer, a middle layer having at least three layers, and an outer layer. Fig. 1 illustrates a layer structure of one embodiment of the tube for supplying ink of the present invention.

The inner layer 1 is a layer resistant to various solvents, and having an excellent oxygen barrier property and an excellent low moisture permeability. Specifically, the inner layer 1 is a layer formed of one of an ethylene-tetrafluoroethylene copolymer resin (hereinafter referred to simply as ETFE-based resin), a tetrafluoroethylene-perfluoroalkoxy alkane copolymer resin (hereinafter referred to simply as PFA resin), and a modified perfluoroalkoxy-based resin (hereinafter referred to simply as CPT resin).

The thickness of the inner layer 1 ranges from 0.01 to 0.5mm. Solvent resistance, an oxygen barrier property, and a low moisture permeability will be provided at that thickness. Preferably a thickness from 0.03 to 0.1 mm is considered.

The middle layer comprises a first middle layer 2-1, a second middle layer 2-2, and a third middle layer 2-3.

The first middle layer 2-1 is formed of a resin having an excellent fusibility with the ETFE-based resin, the PFA resin, or the CPT resin that forms the inner layer 1 and with the second middle layer 2-2, and having an excellent flexibility. The first middle layer comprises one of a polyamide resin, polyamide-based elastomers, adhesive polyolefin resins, and polyurethane resins. Among these, a polyamide resin can be suitably used from a viewpoint of having an excellent fusibility with fluorine-based resins.

The thickness of the first middle layer is not particularly limited as long as strong fusibility can be achieved with the inner layer 1 and with the second middle layer 2-2. Typically, a thickness ranging from 0.01 to 0.5 mm, preferably from 0.01 to 0.05 mm, is considered.

The second middle layer 2-2 is formed of a resin having an excellent fusion bondability with the first middle layer 2-1 and with the third middle layer 2-3, and also having an excellent oxygen barrier property. The second middle layer comprises an ethylene-vinyl alcohol copolymer resin (hereinafter referred to simply as EVOH resin). In this regard, the content ratio of ethylene in the EVOH resin is 28 mol or more, and preferably 44 mol or more. A content ratio of ethylene in this range can provide a layer having an excellent oxygen barrier property and an excellent flexibility.

The thickness of the second middle layer 2-2 ranges from 0.01 to 0.3mm. An oxygen barrier property is provided. Preferably a thickness of from 0.01 to 0.05 mm, is considered.

In addition, a modifier for providing stress crack resistance may be added to the second middle layer 2-2.

Examples of such modifier for use herein include polyester resins, polyamide resins, and polyolefin resins that are highly compatible with an EVOH resin. These modifier materials may be used alone or in combination of two or more thereof.

The third middle layer 2-3 is formed of a resin having an excellent fusibility with the second middle layer 2-2 and with the outer layer 3 as well as an excellent flexibility, and also having an excellent low moisture permeability. Specifically, an adhesive polyolefin resin, a polyamide resin, or a polyurethane resin are used.

Among these, an adhesive polyolefin resin can be suitably used from a viewpoint of having an excellent fusibility with the outer layer 3 and a low moisture permeability.

The thickness of the third middle layer 2-3 is not particularly limited as long as strong fusibility can be achieved with the second middle layer 2-2 and with the outer layer 3. Typically, a thickness ranging from 0.01 to 0.5 mm, preferably from 0.01 to 0.05 mm, is considered.

The outer layer 3 is formed of a thermoplastic resin or elastomer having an excellent flexibility and a low moisture permeability. Specifically, an ethylene-based polymer or a polyolefin-based elastomer can be used.

As used in the present invention, the terms "oxygen barrier property" and "low moisture permeability" mean that the change in the amount of oxygen contained in ink (dissolved oxygen) from the amount of dissolved oxygen in degassed ink can be minimized. Specifically, this condition can be defined such that, for example, sealing degassed ink in the ink supply tube, and leaving the ink supply tube to stand for three days under a condition of a temperature of 20°C and a humidity of 60% causes a change in the amount of dissolved oxygen in the ink of less than 3.0 mg/L.

The tube for supplying ink of the embodiment described above includes the first middle layer 2-1 having an excellent fusibility with the inner layer 1 and with the second middle layer 2-2 between the inner layer 1 having a solvent resistance and a low moisture permeability and the second middle layer 2-2 having an oxygen barrier property; and the first middle layer 2-3 having an excellent fusibility with the outer layer 3 and with the second middle layer 2-2, and also having an excellent low moisture permeability, between the outer layer 3 having a flexibility and a low moisture permeability and the second middle layer 2-2 having an oxygen barrier property. This configuration ensures that the tube for supplying ink has an oxygen barrier property and a low moisture permeability.

The tube for supplying ink of the embodiment described above can be produced by thermal fusion using five extruders, and after merging of the resins in the mold section, discharging and cooling the merged resins to form a five-layer tube. During this process, the inner layer 1 and the first middle layer 2-1; the first middle layer 2-1 and the second middle layer 2-2; the second middle layer 2-2 and the third middle layer 2-3; and the third middle layer 2-3 and the outer layer 3 are fusion bonded (adhere) to each other by heat and pressure in the mold section.

Note that the fusion bonding (adhesion) strength between adjacent layers in this process is equal to 10 N or more per 25 mm or more, and preferably equal to 25 N or more per 25 mm.

Note that bending, into a U shape, of the tube for supplying ink having a fusion bonding (adhesion) strength less than 10 N per 25 mm may cause the bending stress to be distributed over the entire tube for supplying ink, thereby causing the stress to concentrate on the layers. This may result in delamination. Use of an EVOH resin layer, which is said to have a high rigidity and is thus easily cracked, in the second middle layer 2-2 under such condition may promote occurrence of cracks. This would reduce the oxygen barrier property, which may change the properties of ink ingredients. Thus, print quality may be adversely affected.

However, a fusion bonding strength between adjacent layers of equal to 10 N or more per 25 mm or more permits the use of the tube for supplying ink in a U-bent configuration without causing delamination even when a bending stress is continuously placed on the tube for supplying ink, thereby ensuring protection for the second middle layer 2-2 to reduce or eliminate the occurrence of cracks. Thus, a change in properties of ink components can be prevented.

Although the tube for supplying ink of the embodiment described above is configured to have five layers, which are the inner layer 1, the three middle layers, and the outer layer, the tube for supplying ink may be configured to have five or more layers. In this case, use of four or more middle layers and use of resins each having a fusibility with adjacent layers, an oxygen barrier property, and/or a low moisture permeability can provide a multi-layered tube for supplying ink as a whole having barrier properties, such as an oxygen barrier property and a low moisture permeability, suitable for practical use.

### Examples

The present invention will be described below in more detail using Examples.

### [Example 1]

The tube for supplying ink of Example 1 was produced using the following component composition in the layers in Fig. 1.
Inner layer 1: Fluorine resin (ethylene-tetrafluoroethylene copolymer resin (ETFE-based resin) produced by Asahi Glass Co., Ltd., layer thickness: 50 µm)
First middle layer 2-1: Polyamide resin (polyamide 12 produced by Ube Industries, Ltd., layer thickness: 30 µm)
Second middle layer 2-2: Ethylene-vinyl alcohol copolymer resin (EVOH resin) (ethylene-vinyl alcohol copolymer resin produced by Kuraray Co., Ltd., layer thickness: 30 µm)
Third middle layer 2-3: Adhesive polyolefin resin (acid-modified polyethylene produced by Mitsubishi Chemical Corporation, layer thickness: 30 µm)
Outer layer 3: Ethylene-based polymer (ethylene-based polymer produced by Dupont-Mitsui Polychemicals Co., Ltd., layer thickness: 260 µm)

The components described above were used in a coextruder to form a tube, and thus a tube for supplying ink having a five layer structure, and an inner diameter of 3.0 mm, an outer diameter of 3.8 mm, and a wall thickness of 400 µm was produced.

### [Example 2]

The ink supply tube of Example 2 was produced similarly to Example 1 except that the details of the outer layer 3 were as follows.
Outer layer 3: Polyolefin-based elastomer (linear low density polyethylene (L-LDPE) produced by Prime Polymer Co., Ltd., layer thickness: 260 µm)

### [Example 3]

The tube for supplying ink of Example 3 was produced similarly to Example 2 except that the details of the second middle layer 2-2 were as follows. Note that the polyester resin was mixed as a modifier for providing stress crack resistance.
Second middle layer 2-2: Ethylene-vinyl alcohol copolymer resin (EVOH resin)/polyester resin = 80/20 (layer thickness: 30 µm)
EVOH resin: (ethylene-vinyl alcohol copolymer resin produced by Kuraray Co., Ltd.)
Polyester resin: (polyester-based thermoplastic elastomer produced by Mitsubishi Chemical Corporation)

### [Example 4]

The tube for supplying ink of Example 4 was produced similarly to Example 2 except that the details of the outer layer 3 were as follows.
Outer layer 3: Polyolefin-based elastomer (polypropylene resin produced by Japan Polypropylene Corporation, layer thickness: 260 µm)

### [Example 5]

The tube for supplying ink of Example 5 was produced similarly to Example 2 except that the details of the inner layer 1 were as follows.
Inner layer 1: Fluorine resin (tetrafluoroethylene-perfluoroalkoxy alkane copolymer resin (PFA resin) produced by Asahi Glass Co., Ltd., layer thickness: 50 µm)

### [Example 6]

The tube for supplying ink of Example 6 was produced similarly to Example 2 except that the details of the inner layer 1 and the first middle layer 2-1 were as follows.
Inner layer 1: Fluorine resin (modified perfluoroalkoxy-based resin (CPT resin) produced by Daikin Industries, Ltd., layer thickness: 50 µm)
First middle layer 2-1: Polyamide resin (polyamide 12 produced by Daicel-Evonik Ltd., layer thickness: 30 µm)

### [Comparative Example 1]

The tube for supplying ink of Comparative Example 1 having a three layer structure was produced using the following component composition in the layers.
Inner layer: Fluorine resin (ethylene-tetrafluoroethylene resin (ETFE-based resin) produced by Asahi Glass Co., Ltd., layer thickness: 100 µm)
Middle layer: Polyamide resin (polyamide 12 produced by Ube Industries, Ltd., layer thickness: 50 µm)
Outer layer: Polyurethane-based elastomer (polyurethane-based elastomer produced by DIC Bayer Polymer Ltd., layer thickness: 250 µm)

The components described above were used in a coextruder to form a tube, and thus an tube for supplying ink having a three layer structure, and an inner diameter of 3.0 mm, an outer diameter of 3.8 mm, and a wall thickness of 400 µm was produced.

### [Comparative Example 2]

The tube for supplying ink of Comparative Example 2 having a three layer structure was produced using the following component composition in the layers.
Inner layer: Fluorine resin (ethylene-tetrafluoroethylene resin (ETFE-based resin) produced by Asahi Glass Co., Ltd., layer thickness: 100 µm)
Middle layer: Ethylene-vinyl alcohol copolymer resin (EVOH resin) (ethylene-vinyl alcohol copolymer resin produced by Kuraray Co., Ltd., layer thickness: 50 µm)
Outer layer: Polyurethane-based elastomer (polyurethane-based elastomer produced by DIC Bayer Polymer Ltd., layer thickness: 250 µm)

The components described above were used in a coextruder to form a tube, and thus a tube for supplying ink having a three layer structure, and an inner diameter of 3.0 mm, an outer diameter of 3.8 mm, and a wall thickness of 400 µm was produced.

### [Comparative Example 3]

The tube for supplying ink of Comparative Example 1 having a four layer structure using the following component composition in the layers.
Inner layer: Fluorine resin (ethylene-tetrafluoroethylene resin (ETFE-based resin) produced by Asahi Glass Co., Ltd., layer thickness: 100 µm)
Middle layer 1: Polyamide resin (polyamide 12 produced by Ube Industries, Ltd., layer thickness: 50 µm)
Middle layer 2: Ethylene-vinyl alcohol copolymer resin (EVOH resin) (ethylene-vinyl alcohol copolymer resin produced by Kuraray Co., Ltd., layer thickness: 50 µm)
Outer layer: Adhesive polyolefin (acid-modified polyethylene produced by Mitsubishi Chemical Corporation, layer thickness: 200 µm)

The components described above were used in a coextruder to form a tube, and thus a tube for supplying ink having a four layer structure, and an inner diameter of 3.0 mm, an outer diameter of 3.8 mm, and a wall thickness of 400 µm was produced.

### [Evaluation of Tube for Supplying Ink]

The oxygen barrier property, the low moisture permeability, and the flexibility were evaluated for the tubes for supplying ink of Examples 1 to 6 and of Comparative Examples 1 to 3 described above.

### <Decision on Oxygen Barrier Property and Low Moisture Permeability>

The amount of dissolved oxygen in the ink sealed in each of the tubes for supplying ink was measured, and the oxygen barrier property and the low moisture permeability were then evaluated from these results.

### (Measurement of Amount of Dissolved Oxygen)

First, the amount of dissolved oxygen (mg/L) in initial degassed ink was measured. Next, that ink was sealed in a 1 m long tube by plugging both ends thereof for sealing. Then, the tube was left to stand for three days under a condition of a temperature of 20°C and a humidity of 60%. The ink was then collected, and the amount of dissolved oxygen was measured.

The above measurement of the amount of dissolved oxygen was performed using a dissolved oxygen (DO) measuring instrument (trace DO meter TD-51, Toko Chemical Lab. Co., Ltd.).

### (Decision)

The oxygen barrier property and the low moisture permeability of each of the tubes for supplying ink were evaluated such that one exhibiting a change in the amount of dissolved oxygen in the ink after being left to stand for three days from the amount of dissolved oxygen in the initial degassed ink of less than 3.0 mg/L is classified as High, and one exhibiting that change of 3.0 mg/L or more is classified as Low. The results are illustrated in Table 1.

### <Decision on Flexibility>

The flexibility of each of the tubes for supplying ink was evaluated by counting the number of cracks.

### (Measurement of the Number of Cracks)

Ink was sealed in a 1.5 m long tube, and under that condition, the tube was placed in a Cableveyor (registered trademark) unit having a bend radius of 100 mm. Then, the Cableveyor (registered trademark) unit was subjected to 6 million sliding cycles of reciprocation at a speed of 700 mm/sec. After completion, the number of cracks occurred in the tube was counted.

### (Decision)

Decision was made using, as an index indicating the flexibility, the number of cracks occurred in the tube that was counted when 6 million sliding cycles were complete against the criteria shown below.
0 to 10: Very High
11 to 20: High
21 to 30: Moderate
31 or more: Low

The results are illustrated in Table 1.

**[Table 1]**

| | Layer Structure | Amount of dissolved oxygen in degassed ink | Amount of dissolved oxygen after 3 days | Change in amount of dissolved oxygen | Number of cracks | Evaluation of oxygen barrier property and low moisture permeability | Evaluation of flexibility |
|---|---|---|---|---|---|---|---|
| Example 1 | 5 layers | 1.40 | 3.45 | 2.05 | 13 | High | High |
| Example 2 | 5 layers | 1.43 | 3.50 | 2.07 | 15 | High | High |
| Example 3 | 5 layers | 1.42 | 3.88 | 2.46 | 7 | High | Very High |
| Example 4 | 5 layers | 1.45 | 3.69 | 2.24 | 16 | High | High |
| Example 5 | 5 layers | 1.37 | 3.66 | 2.29 | 15 | High | High |
| Example 6 | 5 layers | 1.41 | 3.28 | 1.87 | 18 | High | High |
| Comparative Example 1 | 3 layers | 1.39 | 8.65 | 7.26 | 0 | Low | Very High |
| Comparative Example 2 | 3 layers | 1.42 | 6.62 | 5.20 | 47 | Low | Low |
| Comparative Example3 | 4 layers | 1.43 | 5.12 | 3.69 | 28 | Low | Moderate |

The evaluation results illustrated in Table 1 have shown that the tubes for supplying ink of Examples 1 to 6 each have an oxygen barrier property and a low moisture permeability improved as compared to the tubes for supplying ink of Comparative Examples 1 to 3.

In addition, it has been shown that the tubes for supplying ink of Examples 1 to 6 each have a flexibility improved as compared to the ink supply tubes for supplying ink of Comparative Examples 2 and 3.

Note that, despite the highest flexibility of Comparative Example 1, no use of an ethylene-vinyl alcohol copolymer resin (EVOH resin) in the middle layer thereof has resulted in the worst oxygen barrier property and the worst low moisture permeability.

Moreover, despite a slightly larger change in the amount of dissolved oxygen than those of the other Examples, it has been shown that Example 3 containing a polyester resin in the second middle layer has the higher flexibility than the flexibility of the other tubes.

These results has shown that a tube for supplying ink of the present invention is an ink supply tube for an inkjet printer having a more excellent oxygen barrier property and a more excellent low moisture permeability in addition to an excellent solvent resistance and an excellent flexibility.

## Claims

1. A tube for supplying ink comprising an inner layer (1) which is to be contacted with ink when in use, a middle layer having at least three layers (2-1, 2-2, 2-3), and an outer layer (3), wherein
the middle layer includes a first middle layer (2-1), a second middle layer (2-2), and a third middle layer (2-3),
the inner layer (1) has a thickness ranging from 0.01 to 0.5mm and comprises one of an ethylene-tetrafluoroethylene copolymer resin, a tetrafluoroethylene-perfluoroalkoxy alkane copolymer resin, and a modified perfluoroalkoxy-based resin, each having a solvent resistance and an oxygen barrier property,
the first middle layer (2-1) comprises one of a polyamide resin, a polyamide-based elastomer, an adhesive polyolefin resin or a polyurethane resin,
the second middle layer (2-2) has a thickness ranging from 0.01 to 0.3mm and comprises an ethylene-vinyl alcohol copolymer resin having an oxygen barrier property,
the third middle layer (2-3) comprises an adhesive polyolefin resin, a polyamide resin or a polyurethane resin, and
the outer layer (3) comprises a thermoplastic resin or elastomer.

2. A tube for supplying ink as claimed in claim 1, wherein the second middle layer (2-2) comprises at least one of a polyester resin, a polyamide resin, and a polyolefin resin.

## Patentansprüche

1. Rohrleitung zum Zuführen von Tinte, umfassend eine innere Schicht (1), die im Gebrauch mit Tinte in Kontakt zu bringen ist, eine mittlere Schicht mit mindestens drei Schichten (2-1, 2-2, 2-3) und eine äußere Schicht (3), wobei
die mittlere Schicht eine erste mittlere Schicht (2-1), eine zweite mittlere Schicht (2-2) und eine dritte mittlere Schicht (2-3) einschließt,
die innere Schicht (1) eine Dicke im Bereich von 0,01 bis 0,5 mm aufweist und eines von einem Ethylen-Tetrafluorethylen-Copolymerharz, einem Tetrafluorethylen-Perfluoralkoxyalkan-Copolymerharz und einem modifizierten Harz auf Perfluoralkoxybasis umfasst, die jeweils eine Lösungsmittelbeständigkeit und eine Sauerstoffbarriereeigenschaft aufweisen,
die erste mittlere Schicht (2-1) eines von einem Polyamidharz, einem Elastomer auf Polyamidbasis, einem klebenden Polyolefinharz oder einem Polyurethanharz umfasst,
die zweite mittlere Schicht (2-2) eine Dicke im Bereich von 0,01 bis 0,3 mm aufweist und ein Ethylen-Vinylalkohol-Copolymerharz mit einer Sauerstoffbarriereeigenschaft umfasst,
die dritte mittlere Schicht (2-3) ein klebendes Polyolefinharz, ein Polyamidharz oder ein Polyurethanharz umfasst und
die äußere Schicht (3) ein thermoplastisches Harz oder Elastomer umfasst.

2. Rohrleitung zum Zuführen von Tinte nach Anspruch 1, wobei die zweite mittlere Schicht (2-2) mindestens eines von einem Polyesterharz, einem Polyamidharz und einem Polyolefinharz umfasst.

## Revendications

1. Tube d'alimentation en encre comprenant une couche interne (1) qui doit être mise en contact avec l'encre en utilisation, une couche intermédiaire présentant au moins trois couches (2-1, 2-2, 2-3), et une couche externe (3), dans lequel
la couche intermédiaire inclut une première couche intermédiaire (2-1), une deuxième couche intermédiaire (2-2) et une troisième couche intermédiaire (2-3),
la couche interne (1) présente une épaisseur dans une plage allant de 0,01 à 0,5 mm et comprend une d'une résine de copolymère d'éthylène-tétrafluoroéthylène, d'une résine de copolymère d'alcane de tétrafluoroéthylène-perfluoroalcoxy, et d'une résine à base de perfluoroalcoxy modifiée, chacune présentant une résistance aux solvants et une propriété de barrière à l'oxygène,
la première couche intermédiaire (2-1) comprend un parmi une résine de polyamide, un élastomère à base de polyamide, une résine de polyoléfine adhésive ou une résine de polyuréthane,
la deuxième couche intermédiaire (2-2) présente une épaisseur dans une plage allant de 0,01 à 0,3 mm et comprend une résine copolymère d'éthylène-alcool vinylique présentant une propriété de barrière à l'oxygène,
la troisième couche intermédiaire (2-3) comprend une résine de polyoléfine adhésive, une résine de polyamide ou une résine de polyuréthane, et
la couche externe (3) comprend une résine thermoplastique ou un élastomère.

2. Tube d'alimentation en encre selon la revendication 1, dans lequel la deuxième couche intermédiaire (2-2) comprend au moins une parmi une résine de polyester, une résine de polyamide, et une résine de polyoléfine.
